# EUROPEAN PATENT APPLICATION

(11) **EP 4 280 010 A1**
(43) Date of publication of application: **22.11.2023**
(21) Application number: 21918944.6
(22) Date of filing: 17.09.2021
(51) Int. Cl.: G05D 1/02

(54) **OBSTACLE DETECTION APPARATUS OF CLEANING ROBOT AND CLEANING ROBOT**

(30) Priority: 15.01.2021 CN 202120117307 U
(71) Applicant: Beijing Roborock Technology Co., Ltd., Beijing 102206 (CN)
(72) Inventor: LI, Xing, Beijing 102206 (CN)
(74) Representative: Cabinet Beau de Loménie
(86) International application number: PCT/CN2021/119069
(87) International publication number: WO 2022/151753

(57) **Abstract**

An obstacle detection apparatus of a cleaning robot and a cleaning robot. The obstacle detection apparatus comprises: an action component (4), the action component (4) being disposed at the outer part of the body (1) of the cleaning robot; an elastic component (2), wherein the elastic component (2) is movably connected to the action component (4), so that the action component (4) can move relative to the elastic component (2), and the elastic component (2) can generate deformation during the moving process of the action component (4); detection components (3), the detection components (3) being mounted on the elastic component (2) and being used for sensing the deformation of the elastic component (2) to then generate a strain signal; and a controller, the controller being used to control the motion state of the cleaning robot according to the strain signal.

## Description

### CROSS-REFERENCE TO RELATED APPLICATION

This application claims priority to Chinese Patent Application No. 202120117307.5, filed on January 15, 2021, the disclosure of which is incorporated herein by reference in its entirety.

### TECHNICAL FIELD

The present disclosure relates to the field of cleaning robots, in particular to an obstacle detection device for a cleaning robot and a cleaning robot.

### BACKGROUND ART

The main purpose of a cleaning robot is to replace manual labor in cleaning of a home environment. The cleaning robot combines automatic cleaning with artificial intelligence design. Typically, it sucks dirt on a surface to be cleaned into its own storage box by brushing and sweeping, vacuuming or mopping and wiping, so as to complete the cleaning of the surface.

A distance sensor and a laser radar are typically combined to detect obstacle information during navigational traveling of the existing cleaning robot, so as to achieve an obstacle avoidance function. However, since a detection range of the laser radar is relatively narrower, more detection components need to be provided on the cleaning robot. As a result, more space is occupied, affecting the arrangement of other components.

### SUMMARY OF THE INVENTION

A series of simplified concepts are introduced in the content of the present disclosure, which will be further described in detail in the detailed description of the present disclosure. The content of the present disclosure is not intended to attempt to define key features and necessary technical features of claimed technical solutions, nor does it intend to attempt to determine the protection scope of the claimed technical solutions.

In a first aspect, an obstacle detection device for a cleaning robot is provided according to an embodiment of the present disclosure. The obstacle detection device includes:
an action component, provided on an outer side of a main body of the cleaning robot;
an elastic component, where the elastic component is movably connected to the action component, so that the action component is able to move relative to the elastic component, and the elastic component is able to deform during movement of the action component;
a detection component, mounted on the elastic component and configured to sense the deformation of the elastic component to generate a strain signal; and
a controller, configured to control a movement state of the cleaning robot according to the strain signal.

Optionally, the action component is provided with two through holes for the elastic component to pass through; two ends of the elastic component pass through the two through holes, respectively, and are connected to a base of the cleaning robot.

Optionally, a number of the detection component is one, and the detection component is located in a middle of the elastic component.

Optionally, a number of the detection component is two, and two detection components are symmetrically provided on the elastic component.

Optionally, the elastic component includes a first elastic arm, a second elastic arm and a connector, an end of the first elastic arm is connected to an end of the second elastic arm through the connector, and the connector is provided with an avoidance notch.

Optionally, the two elastic components are located at an end of the first elastic arm and an end of the second elastic arm that are close to the connector, respectively.

Optionally, the action component is a circular arc-shaped cover, and the circular arc-shaped cover is provided outside the main body.

Optionally, the detection component is a strain sensor.

In a second aspect, a cleaning robot is provided according to an embodiment of the present disclosure. The cleaning robot includes the above obstacle detection device for the cleaning robot.

Optionally, the cleaning robot is a sweeping robot, a mopping robot, a floor polishing robot, or a weeding robot.

Optionally, the cleaning robot further includes: a sweeping component including at least one brush, and a driving motor configured to drive the at least one brush to rotate.

Optionally, in the cleaning robot, the brush is provided at a bottom of the main body of the cleaning robot, and the driving motor is provided inside the main body of the cleaning robot.

Optionally, the cleaning robot further includes a walking unit; and the walking unit includes driving wheels configured to drive the cleaning robot to move forward or backward, and a guide wheel configured to change a travel direction of the cleaning robot in a travelling process.

Optionally, in the cleaning robot, the driving wheels include two driving wheels mounted on two sides of a bottom of the main body of the cleaning robot, and the guide wheel is provided in front of the main body of the cleaning robot in the travel direction.

According to the obstacle detection device for a cleaning robot and the cleaning robot provided by the embodiments of the present disclosure, the detection component can generate a strain signal when the elastic component is driven by the action component to deform, and then the controller controls the movement state of the cleaning robot according to the strain signal, so as to achieve an obstacle avoidance function of the cleaning robot. Therefore, through the action component, a detection range of the obstacle detection device is increased, and the number of required detection components is reduced, thereby reducing space occupied by the detection components, and facilitating the arrangement of other components.

### BRIEF DESCRIPTION OF THE DRAWINGS

The following accompanying drawings of the present disclosure are used here as part of the embodiments of the present disclosure for understanding the present disclosure. Embodiments of the present disclosure and descriptions of them are shown in the accompanying drawings to explain the principles of the present disclosure.

In the accompanying drawings:
FIG. 1 is an exploded view of an obstacle detection device for a cleaning robot according to an optional embodiment of the present disclosure;
FIG. 2 is a schematic bottom view of a cleaning robot according to an optional embodiment of the present disclosure;
FIG. 3 is a top view of FIG. 1; and
FIG. 4 is a front view of an elastic component and a detection component.

### Reference numerals:

1, main body; 2, elastic component; 21, first elastic arm; 22, second elastic arm; 23, connector; 3, detection component; 4, action component; 5, walking unit; 51, driving wheel; 52, guide wheel; 6, brush; and 7, avoidance notch.

### DETAILED DESCRIPTION

In the following description, a large number of specific details are provided to understand the present disclosure more thoroughly. However, it is apparent to those skilled in the art that the present disclosure may be implemented without one or more of these details. In other instances, some of the technical features commonly known in the art are not described in order to avoid the confusion with the present disclosure.

It should be noted that the terms used here are only intended to describe specific embodiments rather than to limit the exemplary embodiments according to the present disclosure. The singular forms used here are also intended to include the plural forms unless otherwise indicated clearly in the context. Furthermore, it should also be understood that when the terms "include" and/or "comprise" are used in the description, they indicate the existence of the features, integers, steps, operations, elements and/or components, but do not exclude the existence or addition of one or more other features, integers, steps, operations, elements, components and/or their combination.

The exemplary embodiments according to the present disclosure will now be described in more detail with reference to the accompanying drawings. However, these exemplary embodiments may be implemented in a variety of different forms and should not be construed as being limited to the embodiments set forth here. It should be understood that these embodiments are provided to make the disclosure of the present disclosure thorough and complete and to fully convey the concepts of these exemplary embodiments to those of ordinary skill in the art.

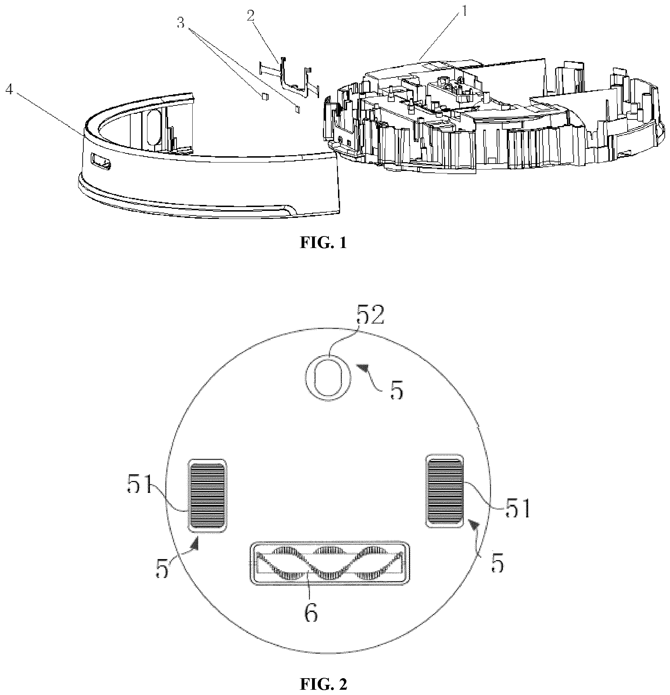

In a first aspect, as shown in FIG. 1, an obstacle detection device for a cleaning robot is provided according to an embodiment of the present disclosure. The obstacle detection device includes an action component 4, which is provided on an outer side of a main body 1 of the cleaning robot and is able to move relative to the main body 1; an elastic component 2, which is movably connected to the action component 4, so that to the action component 4 is able to move relative to the elastic component 2, and is able to deform during the movement of the action component 4; a detection component 3, which is mounted on the elastic component 2, and configured to sense the deformation of the elastic component 2 to generate a strain signal; and a controller, configured to control a movement state of the cleaning robot according to the strain signal.

Among them, the cleaning robot may be a sweeping robot, a mopping robot, a floor polishing robot or a weeding robot. The cleaning robot may be used for home indoor cleaning, large-place cleaning, etc. Specifically, as shown in FIG. 2, taking the sweeping robot as an example, the sweeping robot includes a main body 1, a battery, a robot controller, a battery, a memory, a communication unit, a sweeping component and a charging unit.

The main body 1 is a component that integrates various circuits and serves as a support connection. The main body 1 may be in any shape, which is not strictly limited in the present disclosure.

As shown in FIG. 2, the sweeping component is used to sweep a floor, and may include at least one brush 6 which is a drum-shaped rotary brush that rotates relative to a contact surface in the form of a roller. The brush 6 is provided at the bottom of the main body 1. A driving motor connected to the brush 6 is provided inside the main body 1. The driving motor can drive the brush 6 to rotate. During moving forward of the sweeping robot, the brush 6 sweeps garbage in front of it to an entrance of a dust box, and the garbage at the entrance of the dust box further enters the dust box by a suction force generated by a fan provided behind the dust box.

As shown in FIG. 2, the walking unit 5 is a component related to movement of the cleaning robot, and is used to drive the sweeping robot to move forward or backward. In some embodiments, the walking unit 5 includes a pair of driving wheels 51 mounted on two sides of the middle of the bottom of the main body 1, and the driving wheels 51 are used to drive the sweeping robot to move forward or backward. In some embodiments, the walking unit 5 may further include a guide wheel 52 provided in front of the main body 1, and the guide wheel 52 is used to change a travel direction of the sweeping robot in the travelling process.

The controller is provided inside the main body 1 and is used to control the cleaning robot to perform specific operations. The controller may be, for example, a central processing unit (CPU), a microprocessor or the like. The controller is electrically connected to the battery, the memory, the walking unit 5 and other components to control these components.

The battery is provided inside the main body 1, and is used to provide power for the cleaning robot.

The main body 1 of the cleaning robot is further provided with a charging unit. The charging unit is used to acquire the power from external equipment, so as to charge the battery of the cleaning robot.

The memory is provided on the main body 1. A program is stored in the memory. A corresponding operation is implemented when the program is executed by the robot controller. The memory is further used to store parameters for the cleaning robot. Among them, the memory includes but is not limited to a disk memory, a compact disc read-only memory (CD-ROM), an optical memory, etc.

The communication unit is provided on the main body 1, and is configured to enable the cleaning robot to communicate with external equipment. The communication unit includes but is not limited to a wireless-fidelity (WIFI) communication module, a short-distance communication module, etc.

It should be noted that the sweeping robot may further include other modules or components not shown in FIG. 2, or may only include some of the above modules or components, which is not limited in the embodiments of the present disclosure, in which the above sweeping robot is only taken as an example.

The elastic component 2 may be a component with an elastic function, such as a metal elastic sheet, which is not strictly limited in the present disclosure.

Specifically, when the cleaning robot collides with an obstacle, the action component 4 can move in a direction towards the main body 1 due to resistance generated by the collision with the obstacle, such that a pressure is exerted on the elastic component 2, causing deformation of elastic component 2. Then, the detection component 3 can sense the deformation of the elastic component 2 to generate a first strain signal. Based on the first strain signal, the controller controls the cleaning robot to avoid the obstacle, for example, by bypassing the obstacle or performing a U-turn. After the cleaning robot completes the avoidance action, the resilient force generated due to the deformation of the elastic component 2 causes the action component 4 to return to the position where it is unpressurized, and meanwhile, the elastic component 2 also returns to its original state. The detection component 3 can sense the recovery deformation quantity of the elastic component 2 to generate a second strain signal, and the controller controls the cleaning robot to stop the obstacle avoidance action and continue the sweeping operation according to the second strain signal. In addition, the action component 4 can further protect elements inside the cleaning robot from an impact force caused by physical contact with the obstacle.

According to the obstacle detection device for the cleaning robot provided by the embodiment of the present disclosure, the detection component 3 can generate the strain signal when the elastic component is driven by the action component 4 to deform, and then the controller controls the movement state of the cleaning robot according to the strain signal, so as to achieve an obstacle avoidance function of the cleaning robot Therefore, through the action component 4, a detection range of the obstacle detection device is increased, and the number of required detection components 3 is reduced, thereby reducing space occupied by the detection components, and facilitating the arrangement of other components.

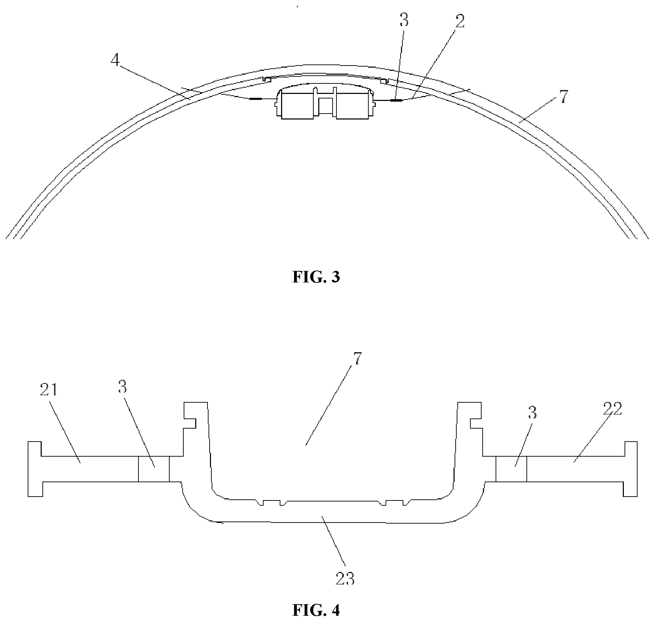

In some embodiments, as shown in FIGs. 1 and 3, the action component 4 is provided with two through holes for the elastic component 2 to pass through, and two ends of the elastic component 2 pass through the two through holes, respectively, and are connected to a base of the cleaning robot.

After passing through the through holes of the action component 4, the ends of the elastic component 2 are connected to the base of the cleaning robot, so that in the process that the action component 4 moves in the direction towards the main body 1 due to the resistance, a pressure is exerted on the elastic component 2 through the side walls of the through holes, so as to deform the elastic component 2. In addition, after the resistance disappears, the elastic component 2 exerts a reaction force on the side walls of the through holes due to deformation, so as to push the action component 4 to return to the position where it is unpressurized. In this way, the movable connection between the elastic component 2 and the action component 4 is achieved without the need to provide an additional connector 23 for the action component 4, and thus, the structure is more compact.

In specific applications, different numbers and set locations may be adopted for the detection components 3, and the different numbers and set locations of the detection components 3 are now described in detail.

In a first implementation, the number of the detection component 3 is one, and the detection component 3 is located in the middle of the elastic component 2.

By providing one detection component 3, the number of the detection component 3 can be minimized and the cost is reduced. Moreover, the deformation quantity of the middle of the elastic component 2 under an external pressure is the maximum. Thus, the detection accuracy can be improved by providing the detection component 3 in the middle of the elastic component 2.

In a second implementation, as shown in FIG. 4, the number of the detection components 3 is two, and the two detection components 3 are symmetrically provided on the elastic component 2.

By symmetrically setting the two detection components 3, a specific direction of the obstacle can be determined by comparing the intensities of the strain signals generated by the two detection components 3. Specifically, if the intensities of the strain signals generated by the two detection components 3 are the same, it can be determined that the obstacle is located right in front of the action component. If the intensity of the strain signal generated by one of the detection components 3 is greater than that generated by the other detection component 3, it can be determined that the obstacle is located near the detection component 3 that generates the strain signal with the greater intensity, so that this setting manner can not only detect the obstacle, but also determine the position of the obstacle.

Specifically, as shown in FIG. 4, the elastic component 2 includes a first elastic arm 21, a second elastic arm 22 and a connector 23. An end of the first elastic arm 21 is connected to an end of the second elastic arm 22 through the connector 23, and the connector 23 is provided with an avoidance notch 7.

The avoidance notch 7 of the connector 23 can avoid the obstruction to other components in the main body 1, more convenient for arrangement of the other components. Moreover, the first elastic arm 21 and the second elastic arm 22 adopt long and narrow structures, so that they are more likely to deform due to an external force, thereby improving the detection sensitivity, further reducing the volume of the elastic component 2, and saving more space.

In view of the symmetrical setting of the two detection components 3, as shown in FIG. 4, specifically, the two elastic components 2 are located at an end of the first elastic arm 21 and an end of the second elastic arm 22 that are close to the connector 23, respectively.

Furthermore, as shown in FIG. 1, the action component 4 is a circular arc-shaped cover, and the circular arc-shaped cover is provided outside the main body 1, thereby facilitating smooth transition during sliding.

Furthermore, the detection component 3 is a strain sensor. The strain sensor is a sensor that measures the strain generated by deformation of an object subjected to a force, and has the advantages of a high resolution, low error, small size, light weight and wide measurement range.

In a second aspect, a cleaning robot is provided according to an embodiment of the present disclosure. The cleaning robot includes the above obstacle detection device for the cleaning robot.

According to the cleaning robot and the obstacle detection device therefor provided by the embodiments of the present disclosure, the detection component 3 can generate the strain signal when the elastic component is driven by the action component 4 to deform, and then the controller controls the movement state of the cleaning robot according to the strain signal, so as to achieve an obstacle avoidance function of the cleaning robot. Therefore, through the action component 4, a detection range of the obstacle detection device is increased, and the number of required detection components 3 is reduced, thereby reducing space occupied by the detection components, and facilitating the arrangement of other components.

Optionally, the cleaning robot is a sweeping robot, a mopping robot, a floor polishing robot, or a weeding robot.

The present disclosure has been described by means of the above embodiments, but it should be understood that the above embodiments are merely for exemplary and illustrative purposes, and are not intended to limit the present disclosure to the scope of the embodiments described. Furthermore, those skilled in the art may understand that the present disclosure is not limited to the above embodiments, and more variations and modifications can be made according to the teachings of the present disclosure. These variations and modifications shall fall within the scope of protection claimed by the present disclosure. The scope of protection of the present disclosure is defined by the appended claims and their equivalent scopes.

## Claims

1. An obstacle detection device for a cleaning robot, comprising:
an action component, provided on an outer side of a main body of the cleaning robot;
an elastic component, wherein the elastic component is movably connected to the action component, so that the action component is able to move relative to the elastic component, and the elastic component is able to deform during movement of the action component;
a detection component, mounted on the elastic component and configured to sense deformation of the elastic component to generate a strain signal; and
a controller, configured to control a movement state of the cleaning robot according to the strain signal.

2. The obstacle detection device for the cleaning robot according to claim 1, wherein the action component is provided with two through holes for the elastic component to pass through; and, two ends of the elastic component pass through the two through holes, respectively, and are connected to a base of the cleaning robot.

3. The obstacle detection device for the cleaning robot according to claim 1, wherein a number of the detection component is one, and the detection component is located in a middle of the elastic component.

4. The obstacle detection device for the cleaning robot according to claim 1, wherein a number of the detection component is two, and two detection components are symmetrically provided on the elastic component.

5. The obstacle detection device for the cleaning robot according to claim 4, wherein the elastic component comprises a first elastic arm, a second elastic arm and a connector, an end of the first elastic arm is connected to an end of the second elastic arm through the connector, and the connector is provided with an avoidance notch.

6. The obstacle detection device for the cleaning robot according to claim 5, wherein the two elastic components are located at an end of the first elastic arm and an end of the second elastic arm that are close to the connector, respectively.

7. The obstacle detection device for the cleaning robot according to claim 1, wherein the action component is a circular arc-shaped cover, and the circular arc-shaped cover is provided outside the main body.

8. The obstacle detection device for the cleaning robot according to claim 1, wherein the detection component is a strain sensor.

9. A cleaning robot, comprising the obstacle detection device for the cleaning robot according to any one of claims 1 to 8.

10. The cleaning robot according to claim 9, wherein the cleaning robot is a sweeping robot, a mopping robot, a floor polishing robot or a weeding robot.

11. The cleaning robot according to claim 9, further comprising:
a sweeping component, comprising at least one brush; and
a driving motor, configured to drive the at least one brush to rotate.

12. The cleaning robot according to claim 11, wherein,
the brush is provided at a bottom of the main body of the cleaning robot; and
the driving motor is provided inside the main body of the cleaning robot.

13. The cleaning robot according to claim 9, further comprising: a walking unit, wherein the walking unit comprises:
driving wheels, configured to drive the cleaning robot to move forward or backward; and
a guide wheel, configured to change a travel direction of the cleaning robot in a travelling process.

14. The cleaning robot according to claim 13, wherein,
the driving wheels comprise two driving wheels mounted on two sides of a bottom of the main body of the cleaning robot; and
the guide wheel is provided in front portion of the main body of the cleaning robot in the travel direction.
